# EUROPÄISCHE PATENTANMELDUNG

(11) **EP 4 177 566 A1**
(43) Veröffentlichungstag der Anmeldung: **10.05.2023**
(21) Anmeldenummer: 22206025.3
(22) Anmeldetag: 08.11.2022
(51) Int. Cl.: G01C 9/28, G01C 9/26, H01R 25/00, H02G 1/00, H02G 3/10, H02G 3/12, H02G 3/14

(54) **INSTALLATIONSHILFE FÜR ELEKTRISCHE INSTALLATIONSELEMENTE**

(30) Priorität: 08.11.2021 DE 102021128961
(71) Anmelder: wolfcraft GmbH, 56746 Kempenich (DE)
(72) Erfinder: Ebert, Winfried, 56745 Weibern (DE)
(74) Vertreter: Grundmann, Dirk

(57) **Zusammenfassung**

Die Erfindung betrifft eine Vorrichtung zum Erleichtern der Installation von Steckdosen, Schaltereinsätzen oder anderen elektrischen Installationselementen (25, 30) mit einer Schablone (1), mit einem magnetischen Element (22) zum Anhaften der Schablone (1) an dem Installationselement (30) und einer Libelle (18) zum horizontalen Ausrichten der Schablone (1). Von der Rückseite der Schablone (1) können auf einer Linie verlaufende Anschläge (7) vorgesehen sein. Ferner können auf einer Linie angeordnete Eingriffsöffnungen (17) vorgesehen sein. Sowohl die Anschläge (7) als auch die Eingriffsöffnungen (17) können zur horizontalen Ausrichtung eines Installationseinsatzes oder einer Hohlwanddose (25) verwendet werden.

## Beschreibung

### Gebiet der Technik

Die Erfindung betrifft eine Vorrichtung zum Erleichtern der Installation von Steckdosen, Schaltereinsätzen oder anderen elektrischen Installationselementen mit einer insbesondere als flacher Körper gestalteten Schablone, mit einem magnetischen Element zum Anhaften der Schablone an dem Installationselement und einer Libelle zum horizontalen Ausrichten der Schablone.

Die Erfindung betrifft darüber hinaus eine Vorrichtung zum Erleichtern der Installation von Steckdosen, Schaltereinsätzen oder anderen elektrischen Installationselementen mit einer als flacher Körper gestalteten Schablone, mit einer Libelle zum horizontalen Ausrichten der Schablone.

### Stand der Technik

Die DE 20 2008 017 075 U1 beschreibt eine Schablone zum Ausrichten einer Aufnahme eines Steckdoseneinsatzes mit einem magnetischen Element, einer Libelle und einer Randkante, die einen eine Linie definierenden Anschlag ausbildet.

Die US 2021/0126443 A1 beschreibt ebenfalls eine Hilfsvorrichtung zur Montage einer Steckdose oder eines Schaltereinsatzes.

Als Vorrichtung zur Positionierung einer elektrischen Verteilerdose schlägt die US 5,111,593 eine höhenverstellbare Schablone vor. Montagehilfen sind ferner bekannt aus der DE 4304339 A1 und US 8,281,496 B1.

Eine Schablone zur Markierung von Hohlwanddosen wird in der DE 10 2015 004 053 B3 beschrieben. Von der Rückseite der auch hier von einem Flachkörper gebildeten Schablone ragen Spitzen ab, die in Markierungslöcher eindringen können.

Ähnliche Schablonen sind aus den US 5,813,130, US 2006/0191150 A1, US 5,222,303 oder US 6,223,445 B1 vorbekannt.

### Zusammenfassung der Erfindung

Der Erfindung liegt die Aufgabe zugrunde, eine gattungsgemäße Installationshilfe gebrauchsvorteilhaft weiterzubilden. Der Erfindung liegt insbesondere auch die Aufgabe zugrunde, eine Installationshilfe zu schaffen, mit der nicht nur Einsätze, sondern auch Hohlwanddosen hinsichtlich ihrer Horizontallage ausgerichtet werden können. Der Erfindung liegt weiter die Aufgabe zugrunde, mit einfachen Mitteln eine Hohlwanddose ausrichten zu können.

Gelöst wird die Aufgabe durch die in den Ansprüchen angegebene Erfindung, wobei die Unteransprüche nicht nur vorteilhafte Weiterbildungen der in den nebengeordneten Ansprüchen angegebenen Erfindung sind, sondern auch eigenständige Lösungen der Aufgabe darstellen.

Gemäß einem Aspekt der Erfindung wird die Aufgabe dadurch gelöst, dass ein flacher Schablonenkörper einen Anschlag ausbildet, der entnehmbar in einer Durchstecköffnung der Schablone steckt. Gemäß einer Variante der Erfindung weist die Schablone zwei auf einer Linie angeordnete Eingriffsöffnungen auf, in die jeweils der Kopf einer Befestigungsschraube oder einer Spannschraube einer Hohlwanddose eingreifen kann. Erfindungsgemäß soll eine dieser Eingriffsöffnungen einen kreisrunden Querschnitt aufweisen, der nur geringfügig größer ist als ein Durchmesser eines Standartschraubenkopfes einer Befestigungsschraube. Die andere Eingriffsöffnung soll eine quer zur Verbindungsrichtung gemessene Weite aufweisen, die dem Durchmesser der ersten Öffnung entspricht. Die in Richtung der Verbindungslinie gemessene Länge der zweiten Öffnung soll aber größer sein, als der Durchmesser der ersten Öffnung.

Eine erfindungsgemäße Vorrichtung kann zumindest eines der folgenden technischen Merkmale aufweisen. Eine erfindungsgemäße Vorrichtung weist bevorzugt mehrere der nachfolgend genannten technischen Merkmale auf. Sämtliche nachfolgend genannten technischen Merkmale können beliebig miteinander kombiniert werden:

Die Schablone kann aus Kunststoff bestehen und/oder ein Flachkörper sein. Die Schablone kann eine großflächige Öffnung aufweisen. Die Öffnung kann ringsumschlossen sein. Durch die Öffnung kann ein Zugriff auf eine Höhlung einer Hohlwanddose erfolgen. Durch die Öffnung kann aber auch ein Zugriff auf einen Unterputzeinsatz erfolgen, beispielsweise um Kabel zu ordnen oder anzuschließen oder um Befestigungsmittel, wie Befestigungsschrauben zu betätigen. Die Schablone kann mehrere parallel zueinander verlaufende Randkanten aufweisen. Eine untere Randkante kann parallel zu einer oberen Randkante verlaufen. Zwei seitliche Randkanten können parallel zueinander verlaufen. Eine untere Randkante und/oder eine oberer Randkante können in einem rechten Winkel zu einer oder mehreren seitlichen Randkanten verlaufen. Die Schablone kann einen oberen Abschnitt aufweisen, der schmaler ausgestaltet ist, als ein unterer Abschnitt, wobei der obere Abschnitt eine Libelle tragen kann und der untere Abschnitt eine großflächige Öffnung aufweisen kann, wobei die großflächige Öffnung Markierungselemente aufweisen kann. Die Markierungselemente können von Vorsprüngen oder Ausschnitten ausgebildet sein. Die Ausschnitte und/oder die Vorsprünge können in einem rechten Winkel zueinander verlaufende Randkanten aufweisen. Die großflächige Öffnung kann sich diametral gegenüberliegende Ausschnitte aufweisen. Bevorzugt sind vier derartige, sich diametral gegenüberliegende Ausschnitte vorgesehen. Durch die sich gegenüberliegenden Ausschnitte können gedachte Linien gezogen werden, die parallel zu den oberen, unteren und/oder seitlichen Randkanten verlaufen können. Die Randkanten und insbesondere zumindest eine der Randkanten, beispielsweise eine obere, untere und/oder seitliche Randkante kann Markierungen aufweisen. Diese Markierungen können auf den zuvor gedachten Linien liegen, wobei die Linien durch den Mittelpunkt der großflächigen Öffnung verlaufen können. Die beiden Linien können sich rechtwinklig im Mittelpunkt kreuzen. Die Schablone kann aus Kunststoff bestehen. Zwei sich gegenüberliegende und parallel zueinander verlaufende Randkanten können einen Abstand von 71 mm oder 91 mm aufweisen. Eine der Randkanten kann zusätzlich Markierungen aufweisen, die 71 mm voneinander beabstandet sind, wobei mittig zwischen den beiden zusätzlichen Markierungen eine weitere Markierung liegen kann, die auf der Mitte der Randkante liegt. Es kann ferner vorgesehen sein, dass der untere Abschnitt eine Breite von 91 mm aufweist und ein oberer, verschmälerter Abschnitt eine Breite von 71 mm aufweist. Ein Abstand einer Markierung der seitlichen Randkante, die auf Höhe des Mittelpunktes der großflächigen Öffnung liegt, kann von einer unteren Randkante oder einer oberen Randkante einen Abstand von 71 mm besitzen. Der Abstand zweier Randkanten eines verschmälerten Abschnitts kann 71 mm betragen. Die Schablone kann ferner zumindest eine Libelle aufweisen, die sich parallel zu einer der Randkanten erstreckt, so dass dieser Randkante in eine Horizontallage gebracht werden kann. Es können ferner Magnete vorgesehen sein, mit denen die Schablone an einem Stahlrahmen eines Einsatzes, beispielsweise eines Schaltereinsatzes oder eines Steckereinsatzes anhaften kann. Es können mehrere Magnete vorgesehen sein. Es können insbesondere vier auf den Ecken eines Rechteckes, insbesondere eines Quadrates angeordnete Magnete vorgesehen sein, wobei sich das Rechteck bzw. Quadrat um den Mittelpunkt einer großflächigen Öffnung erstrecken kann. Die Magnete können stiftförmig und insbesondere walzenförmig ausgebildet sein. Die Magnete können in Öffnungen eines die Schablone ausbildenden Grundkörpers aus Kunststoff eingesteckt sein. Bei den Öffnungen kann es sich um Sacklöcher handeln, die zur Rückseite der Schablone offen sind. Es kann vorgesehen sein, dass die Polachsen der Magnete parallel zueinander verlaufen. Die Polachsen der Magnete können quer zur Erstreckungsrichtung der Breitseitenfläche der Schablone ausgerichtet sein. Es kann darüber hinaus ein von der Rückseite abragender Vorsprung vorgesehen sein, mit dem die Schablone an einer Hohlwanddose oder an einem Einsatz angelegt werden kann, wobei der Vorsprung derart ausgebildet ist oder aus mehreren Teilen besteht, dass die an der Hohlwanddose oder am Einsatz anliegende Schablone eine definierte Winkelstellung zu Hohlwanddose oder zum Einsatz aufweist. Als Folge dessen kann die Winkelstellung der Hohlwanddose oder des Einsatzes gegenüber einer Horizontalebene verändert werden. Es ist insbesondere möglich, die Hohlwanddose oder den Einsatz in eine Horizontallage zu bringen. Die Schablone kann dabei mit einer Randkante an Vorsprünge des Einsatzes oder der Hohlwanddose angelegt werden, beispielsweise kann eine untere Randkante an Schrauben, insbesondere Befestigungsschrauben einer Hohlwanddose oder eines Einsatzes, die aus einer Befestigungsebene herausragen, angelegt werden.

Eine Schablone, die zumindest eines der zuvor genannten Merkmale aufweist wird bevorzugt dadurch weitergebildet, dass ein an eine Randkante des Installationselementes anlegbarer, von einer Rückseite der Schablone vorstehender, auf einer horizontal verlaufenden Linie angeordneter Anschlag vorgesehen ist. Der Anschlag kann dabei ein oder mehrere Teile aufweisen, die sich auf einer Linie erstrecken. Der Anschlag kann aber auch eine längliche Gestalt aufweisen, die eine sich auf einer Linie erstreckende Anschlagfläche ausbildet. Der Anschlag kann auch zwei derartige, sich entlang derselben Linie erstreckende Abschnitte aufweisen. Es kann vorgesehen sein, dass der Anschlag von einem Anschlagträger ausgebildet ist. Es kann vorgesehen sein, dass der Anschlag von einem Grundkörper der Schablone trennbar ist. Ein den Anschlag ausbildender Anschlagträger kann entnehmbar in einer Durchstecköffnung der Schablone, insbesondere eines Grundkörpers der Schablone stecken. Es können auch mehrere Teile vorgesehen sein, die zusammen einen Anschlag ausbilden und die jeweils in einer Durchstecköffnung der Schablone stecken. Der Anschlag kann von einer Frontseite der Schablone in die ein oder mehreren Durchstecköffnungen eingesteckt werden. Der Anschlag kann aber auch von der Rückseite her in die ein oder mehreren Durchstecköffnungen eingesteckt werden. Bevorzugt kann der Anschlag bis gegen einen vom Anschlag ausgebildeten Widerstand in die Durchstecköffnungen eingesteckt werden. Der Widerstand tritt dann gegen die Rückseite oder die Frontseite der Schablone. Je nachdem ob der Anschlag bzw. ein ein oder mehrere Anschläge ausbildende Anschlagträger von der Rückseite oder der Frontseite in die Durchstecköffnung eingesteckt wird, können die Anschläge um ein anderes Maß von der Rückseite abragen. Die Schablone kann auf ihrer Frontseite oder auf ihrer Rückseite einen Bereich aufweisen, an dem der Anschlag in einer Verwahrstellung befestigt sein kann. Hierzu kann der Anschlag und insbesondere ein Anschlagträger von dem Grundkörper getrennt werden, indem der Anschlag oder der Anschlagträger aus einer Durchstecköffnung herausgezogen wird. Der Anschlag oder der Anschlagträger kann von einem Flachkörper ausgebildet sein, der dann mit einer Breitseitenfläche auf einer Breitseite der Schablone angeordnet werden kann. Der Anschlag oder der Anschlagträger besteht bevorzugt aus einem magnetischen oder magnetisierbaren Werkstoff. Er kann durch magnetische Kraft am Grundkörper der Schablone fixiert werden. Es können Justierelemente vorgesehen sein, die die Lage des Anschlages oder des Anschlagträgers in der Verwahrstellung definieren. Beispielsweise können von der Breitseitenfläche des Grundkörpers abragende Vorsprünge in Ausnehmungen, beispielsweise Bohrungen des Anschlagträgers eingreifen. Der Anschlagträger kann zwei fest miteinander und insbesondere materialeinheitlich miteinander verbundene Abschnitte aufweisen, von denen jeder einen Fortsatz aufweist, der durch die Durchstecköffnung oder jeweils durch eine Durchstecköffnung hindurchsteckbar ist. Der Anschlag kann eine von der Rückseite der Schablone abragende längliche Rippe ausbilden, die insbesondere parallel zu einer der Randkanten der Schablone verläuft. Der Anschlagträger kann aus Metall, insbesondere aus Stahl bestehen. Der Anschlagträger kann mit seinen ein oder mehreren Fortsätzen voran von der Frontseite durch die mindestens eine Durchstecköffnung gesteckt werden, bis er eine Anschlagstellung erreicht. In dieser Anschlagstellung durchragen die ein oder mehreren Fortsätze die ein oder mehreren Durchstecköffnungen, so das Endabschnitte der ein oder mehreren Fortsätze von der Rückseite der Schablone abragen, um den Anschlag auszubilden.

Eine Schablone, die zumindest eines der zuvor genannten Merkmale aufweist wird bevorzugt dadurch weitergebildet, dass der Grundkörper der Schablone zwei auf einer Linie angeordnete Eingriffsöffnungen aufweist. Die Eingriffsöffnungen können von Vertiefungen der Rückseite, beispielsweise Sackbohrungen oder von zu der Rückseite und zur Frontseite offenen Fenstern ausgebildet sein. Der Abstand der Eingriffsöffnungen kann 62 mm betragen. Bevorzugt entspricht der Abstand der Eingriffsöffnungen dem Abstand zweier Befestigungsschrauben oder zweier Spannschrauben einer Hohlwanddose, so dass die Schraubenköpfe in jeweils eine Eingriffsöffnung eintreten können. Zumindest eine der Eingriffsöffnungen kann einen kreisrunden Querschnitt aufweisen, der nur geringfügig größer ist, als der Durchmesser eines Kopfes der Befestigungsschraube oder der Spannschraube. Es kann vorgesehen sein, dass beide Eingriffsöffnungen einen kreisrunden Querschnitt aufweisen, der derart gestaltet ist. Gemäß einer bevorzugten Ausgestaltung ist aber vorgesehen, dass nur eine Eingriffsöffnung vorgesehen ist, deren Durchmesser geringfügig größer als der Durchmesser des Kopfes der Befestigungsschraube oder Spannschraube ist. Die andere Eingriffsöffnung kann eine Breite aufweisen, die sich quer zu der Linie erstreckt, auf der die beiden Eingriffsöffnungen liegen, welche nur geringfügig größer ist als der Durchmesser der Befestigungsschraube oder Spannschraube. Die sich quer, also parallel zu dieser Linie erstreckende Länge der Eingriffsöffnung kann größer sein, so dass Fertigungstoleranzen kompensiert werden können. Diese Linie erstreckt sich bevorzugt parallel zur Erstreckungsrichtung der Libelle, so dass die Eingriffsöffnungen in eine Horizontallage gebracht werden können. Es ist aber auch vorgesehen, dass sich diese Linie quer zur Erstreckungsrichtung der Libelle erstreckt, so dass die Eingriffsöffnungen in eine Vertikallage gebracht werden können. Die Eingriffsöffnungen können auf einer Linie liegen, die parallel zu einer der Randkanten der Schablone verläuft. Die Durchmesser der Eingriffsöffnungen sind derart geringfügig größer als der Durchmesser des Kopfes der Befestigungs- oder Spannschraube, dass die Schablone ein minimales Schwenkbewegungsspiel gegenüber der Hohlwanddose aufweist, wenn die Schraubenköpfe in den Eingriffsöffnungen stecken.

Die Schablone kann wie folgt verwendet werden: Ein Installationselement, insbesondere ein elektrisches Installationselement, aber auch jedes andere Element, das in eine Horizontallage gebracht werden soll, kann zwei auf einer Linie angeordnete Anlagestellen aufweisen. Es kann sich aber auch um eine längliche Anlagestelle handeln. An dieser Anlagestelle kann eine der Randkanten der Schablone angelegt werden. Mit der Libelle kann dann der Winkel dieser Anlagestellen gegenüber einer Horizontalebene festgestellt werden. Ist die Winkellage des Installationselementes veränderbar, so kann das Installationselement in eine Horizontallage ausgerichtet werden. In ähnlicher Weise kann das Element aber auch vertikal ausgerichtet werden, wenn an die Anlagestellen eine senkrecht zur Erstreckungsrichtung der Libelle verlaufende Randkante angelegt wird. Die beiden oben genannten Anschläge oder der oben beschriebene längliche Anschlag erweisen sich als vorteilhaft, wenn Sie von der Rückseite abragen. Der Anschlag kann dann beispielsweise an eine Randkante eines Stahlrahmens des Installationselementes angelegt werden. Besitzt die Schablone darüber hinaus Magnete, so kann die Schablone temporär am Stahlrahmen anhaften. Die beiden Anschläge oder der eine Anschlag können entfernt werden, indem ein den einen Anschlag oder die beiden Anschläge ausbildender Anschlagträger aus einer Durchstecköffnung herausgezogen wird. Der Anschlagträger kann dann in einer Verwahrstellung aufbewahrt werden, wobei er bevorzugt von den Magneten in der Verwahrstellung gehalten wird. Hierzu können die Magnete in dem Flächenbereich der Breitseitenfläche der Schablone angeordnet sein, auf der sich der Anschlagträger befindet, wenn er seine Verwahrstellung einnimmt. Um die Schablone in einer zur Durchführung der Ausrichtung ausreichenden drehfesten Verbindung zum Installationselement zu bringen, können ferner die oben beschriebenen Eingriffsöffnungen verwendet werden. Hierzu werden zwei bevorzugt diametral bezogen auf ein Zentrum des Installationselementes angeordnete Schrauben geringfügig aus ihren Einschrauböffnungen herausgeschraubt, so dass ihre Schraubenköpfe aus einer Installationsebene herausragen. Die Schraubenköpfe können dann in die Eingriffsöffnungen hineinragen. Da die Breite bzw. der Durchmesser der Eingriffsöffnungen nur geringfügig größer ist als der Durchmesser der Schraubenköpfe bewirken die in die Eingriffsöffnungen hineinragenden Schraubenköpfe eine ausreichende drehfeste Verbindung zwischen Installationselement und Schablone. Bei dieser Art der Verwendung der Schablone kann der Anschlagträger aus seiner Funktionsstellung zurückgezogen werden, so dass er keine über die Rückseite hinausragenden Anschläge ausbildet. Der Anschlagträger kann auch vollständig aus den Durchstecköffnungen oder der einen Durchstecköffnung herausgezogen werden und in seine Verwahrstellung gebracht werden, wenn die Schablone wie zuletzt beschrieben verwendet wird.

Mithilfe der Schablone können darüber hinaus Markierungen vorgenommen werden, an denen Bohrungen angesetzt werden sollen, in die Installationselemente und insbesondere Hohlwanddosen eingesetzt werden sollen. Hierzu können die an den Randkanten angeordneten Markierungen verwendet werden. Durch eine entsprechende Drehstellung der Schablone lässt sich beispielsweise mit der 71 mm von einer durch die Mitte der großflächigen Öffnung verlaufenden Randkante der Mittelpunkt einer benachbarten Bohrung anzeichnen. Besitzen zwei benachbarte Markierungen oder zwei sich gegenüberliegende Randkanten einen Abstand von 91 mm, so können die Positionen von Netzwerkdosen angezeichnet werden. Mithilfe der Schablone können somit mehrere untereinander oder übereinander angeordnete Installationselemente auf das Standardabstandsmaß von 71 mm bzw. 91 mm positioniert werden.

### Kurze Beschreibung der Zeichnungen

Ein Ausführungsbeispiel der Erfindung wird nachfolgend anhand beigefügter Zeichnungen erläutert. Es zeigen:
- Fig. 1: eine perspektivische Darstellung einer Schablone mit einem sich in einer Verwahrstellung befindlichen Anschlagträger 7;

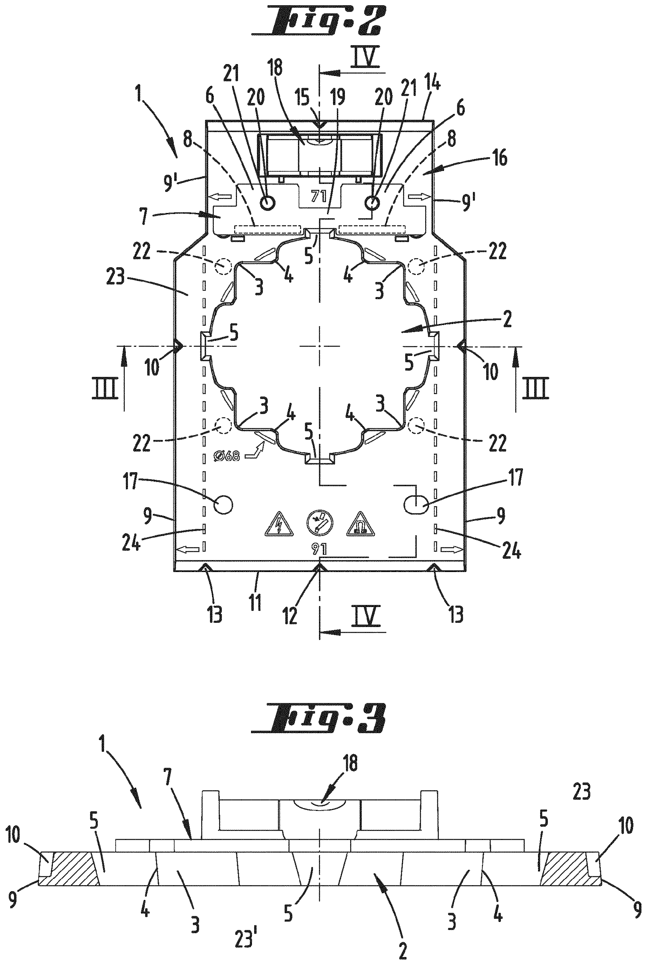

- Fig. 2: eine Draufsicht auf die in der Figur 1 dargestellte Schablone;
- Fig. 3: den Schnitt gemäß der Linie III - III in Figur 2;

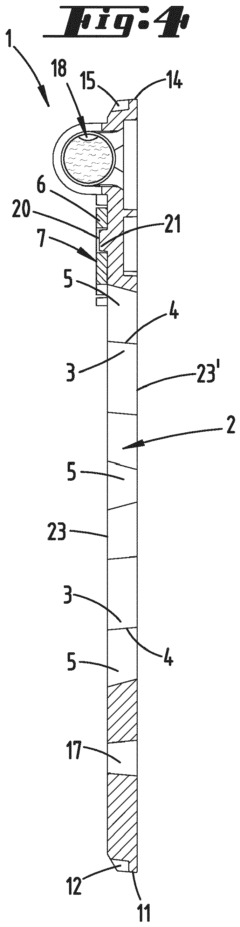

- Fig. 4: den Schnitt gemäß der Linie IV - IV in Figur 2;

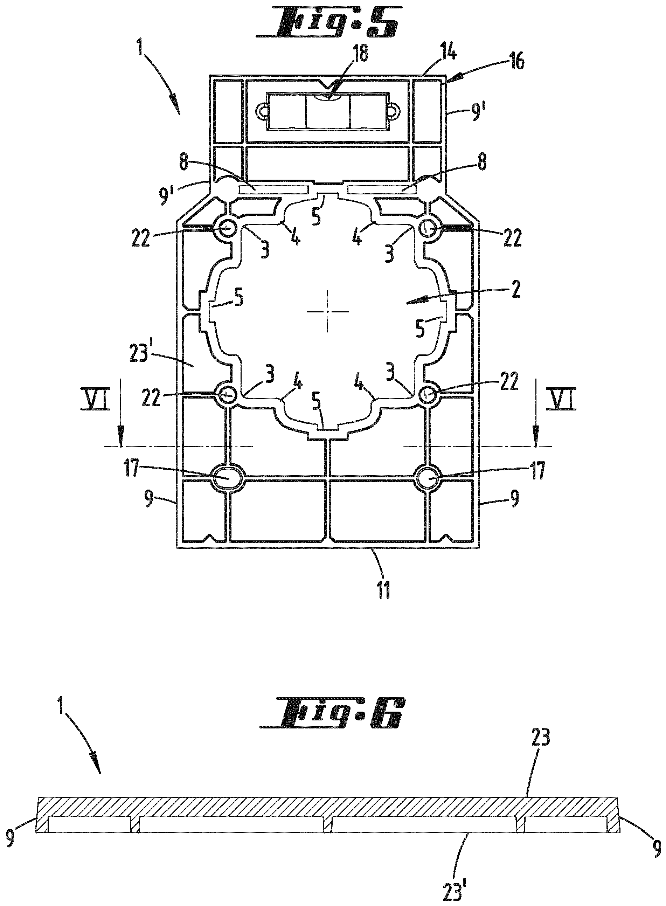

- Fig. 5: eine Rückseitenansicht;
- Fig. 6: den Schnitt gemäß der Linie VI - VI in Figur 5;
- Fig. 7: eine Darstellung gemäß Figur 2 zur Verdeutlichung eines ersten Anwendungsfalls, bei dem Schrauben 27 einer Hohlwanddose 25 in Fenster 17 eingreifen;
- Fig. 7a: den Schnitt gemäß der Linie IV - IV in Figur 2 jedoch in dem in der Figur 7 dargestellten Verwendungsfall;
- Fig. 8: eine Darstellung gemäß Figur 2 zur Verdeutlichung eines zweiten Verwendungsfalls, bei dem eine untere Randkante 11 auf die Schrauben 27 der Hohlwanddose 25 aufgesetzt ist;
- Fig. 8a: den Schnitt gemäß der Linie IV - IV in Figur 2 jedoch in dem in der Figur 8 dargestellten Verwendungsfall;

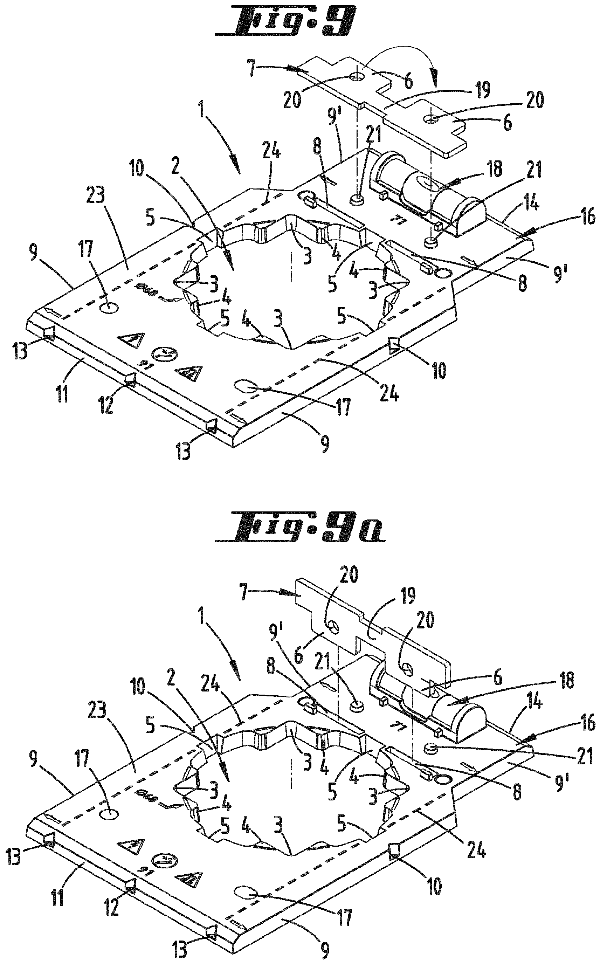

- Fig. 9: eine Darstellung gemäß Figur 2 jedoch mit dem aus der Verwahrstellung entnommenen Anschlagträger 7;
- Fig. 9a: eine Darstellung gemäß Figur 9, wobei der Anschlagträger 7 derart orientiert ist, dass die Anschläge 6 in Durchstecköffnungen 8 eingesteckt werden können;
- Fig. 10: eine perspektivische Darstellung einer Rückansicht mit in die Durchstecköffnungen 8 eingesteckten Anschlägen 6;
- Fig. 11: einen Schnitt durch die Durchstecköffnungen 8 mit darin eingestecktem Abschnitt des Anschlagträgers 7;
- Fig. 12: einen Schnitt durch die Schablone 1 entlang der Schnittlinie XII - XII in Figur 8;
- Fig. 13: eine Darstellung gemäß Figur 2 zur Verdeutlichung eines dritten Anwendungsfalls, bei dem sich Anschläge 6 des Anschlagträgers 7 auf einer Randkante 33 einer Metallplatte 31 eines Einsatzes 30 abstützen;
- Fig. 13a: den Schnitt gemäß der Linie XIIIA - XIIIA in Figur 13 und
- Fig. 14: vergrößert den Ausschnitt XIV in Figur 13a.

### Beschreibung der Ausführungsformen

Die Schablone 1 besitzt einen flachen Grundkörper, der als Kunststoffspritzgussteil gefertigt ist. Der Grundkörper kann aber auch anders gefertigt werden.

Der Grundkörper besitzt eine im Wesentlichen rechteckige Gestalt mit einer unteren Randkante 11, der eine obere Randkante 14 gegenüberliegt. Die untere Randkante 11 verläuft rechtwinklig zu zwei seitlichen Randkanten 9, die einen Abstand von 91 mm besitzen. Die Randkanten 9 können aber auch einen anderen Abstand, beispielsweise 71 mm besitzen. In einem nicht dargestellten Ausführungsbeispiel kann zudem vorgesehen sein, dass die Randkanten nicht parallel zueinander verlaufen und auch nicht rechtwinklig zueinander stehenden.

Bei dem in den Figuren dargestellten Ausführungsbeispiel hat die obere Randkante 14 eine geringere Länge als die untere Randkante 11. Die Länge der oberen Randkante beträgt 71 mm. In nicht dargestellten Ausführungsbeispielen kann die Länge der oberen Randkante davon abweichen. An die obere Randkante 14 grenzen rechtwinklig zwei parallel zueinander verlaufende seitliche Randkanten 9' an, die einen Abstand von 71 mm aufweisen, aber auch einen anderen Abstand besitzen können. Unter Ausbildung von schrägen Flanken gehen die kürzer voneinander beabstandeten seitlichen Randkanten 9' in die einen größeren Abstand voneinander besitzenden Randkanten 9 über.

Der Grundkörper der Schablone 1 besitzt eine großflächige Öffnung 2, deren Rand sich entlang eines Umfangskreises erstreckt, der in etwa einem Außendurchmesser einer Hohlwanddose 25 entspricht. Von diesem Rand ragen in Radialeinwärtsrichtung Vorsprünge 4 ab, die im Ausführungsbeispiel rechtwinklig zueinander stehende Ränder besitzen. Die Ränder der Vorsprünge 4 können parallel zu Randkanten verlaufen. Zwischen den Vorsprüngen 4 erstrecken sich jeweils Ausschnitte 3, deren Ränder ebenfalls rechtwinklig zueinander verlaufen können. Die Randgestaltung der Öffnung 2 besitzt hinsichtlich einer durch einen Mittelpunkt der Öffnung 2 verlaufenden Linie, die parallel zur unteren Randkante 11 verläuft, eine Klappsymmetrie. Die Randgestaltung der Öffnung 2 besitzt auch hinsichtlich einer durch den Mittelpunkt der Öffnung 2 verlaufenden Linie, die parallel zu den seitlichen Randkanten 9 verläuft, eine Klappsymmetrie.

Die Vorsprünge 4 bzw. die dazwischen angeordneten Ausschnitte 3 sind so gestaltet, dass die Ausschnitte 3 in den Eckbereichen eines Quadrates liegen.

Die Öffnung 2 besitzt darüber hinaus vier Ausschnitte 5, die eine größere Entfernung zum Mittelpunkt der Öffnung 2 aufweisen als die Ausschnitte 3. Die Ausschnitte 5 liegen sich jeweils paarweise diametral bezogen auf den Mittelpunkt der Öffnung 2 gegenüber. Die Öffnungen 5 liegen derart weit auseinander, dass durch die Öffnungen 5 einer mit der Öffnung 2 auf eine Hohlwanddose 25 aufgelegten Schablone ein Schraubwerkzeug hindurchgreifen kann, mit dem Befestigungsschrauben 28 oder Spannschrauben 27 einer Hohlwanddose 25 betätigt werden können.

Auf einer durch den Mittelpunkt der Öffnung 2, die Öffnungen 5 und parallel zur unteren Randkante 11 verlaufenden gedachten Linie liegen den seitlichen Randkanten 9 zugeordnete Markierungen 10. Die Markierungen 10 sind von der unteren Randkante 11 um 71 mm beabstandet.

Auf einer durch den Mittelpunkt der Öffnung 2, die Öffnungen 5 und parallel zu den seitlichen Randkanten 11 verlaufenden gedachten Linie liegen auf der unteren Randkante 11 eine Markierung 12 und auf der oberen Randkante 14 eine Markierung 15.

Auf der unteren Randkante 11 liegen weitere Markierungen 13, die um 71 mm voneinander beabstandet sind und jeweils denselben Abstand zur mittleren Markierung 12 aufweisen. Zwischen den weiteren Markierungen 13 und den oberen seitlichen Randkanten 9' verläuft eine Orientierungslinie 24, die sich parallel zur seitlichen Randkanten 9 erstreckt. Zwei Orientierungslinien 24 verlaufen parallel zueinander.

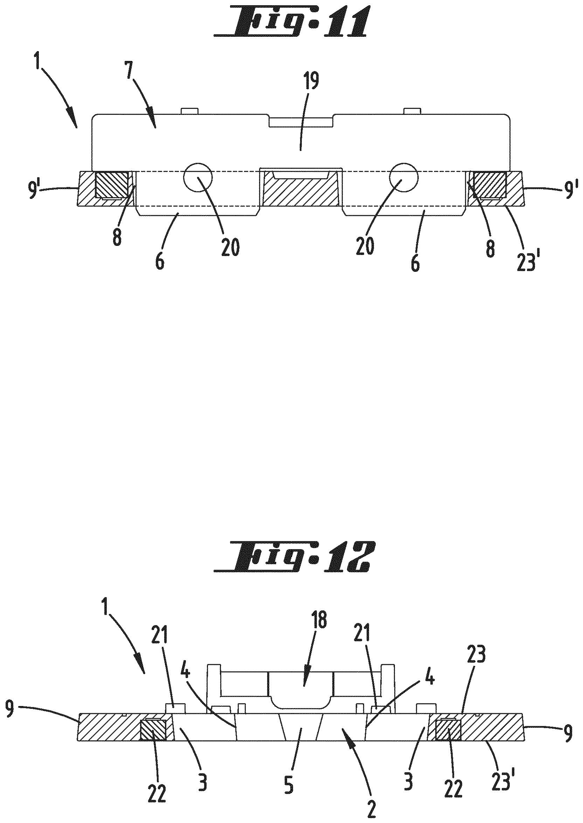

Es sind vier Magnete 22 vorgesehen, die jeweils in einer Sackbohrung der Grundplatte der Schablone 1 einstecken (siehe Figur 12). Die zylinderförmigen Magnete 22 liegen auf den Eckpunkten eines Quadrates dessen Mittelpunkt zumindest annähernd der Mittelpunkt der großflächigen Öffnung 2 entspricht.

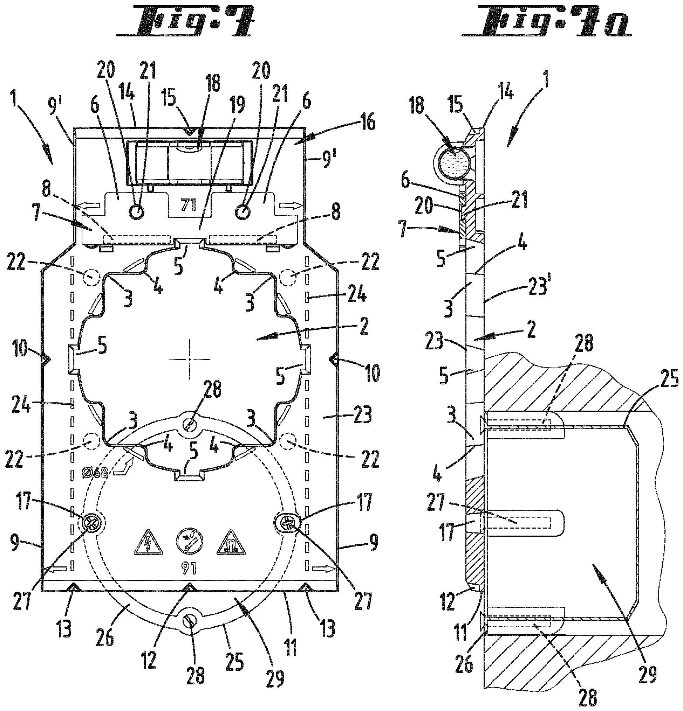

In einem Bereich zwischen der großflächigen Öffnung 2 und der unteren Randkante 11 sind zwei Fenster 17 angeordnet. Das in der Figur 7 links dargestellte Fenster 17 besitzt einen Innendurchmesser, der dem Außendurchmesser eines Kopfes einer Spannschraube 27 entspricht. Es ist aber auch möglich, dass der Innendurchmesser dem Außendurchmesser eines Kopfes einer Befestigungsschraube 28 entspricht. Das in der Figur 7 rechts dargestellte Fenster 17 besitzt eine sich quer zur Erstreckungsrichtung der unteren Randkante 11 erstreckende Breite, die in etwa dem Außendurchmesser des Kopfes der oben genannten Schraube entspricht. Die quer dazu gemessene Länge des Fensters 17 ist etwas größer. Die beiden Fenster 17 liegen auf einer gedachten Linie, die sich parallel zu einer Erstreckungsrichtung einer Libelle 18 erstreckt. Eins der beiden Fenster 17 oder beide Fenster 17 können eine sich in Richtung in dieser Linie erstreckende Länge aufweisen, die größer als die Breite ist und insbesondere größer als der Außendurchmesser des Schraubenkopfes ist.

Beim Ausführungsbeispiel ist die Libelle in einem oberen, verschmälerten Fortsatz 16 des Grundkörpers der Schablone 1 angeordnet. Die Libelle 18 kann aber auch im unteren Abschnitt des Grundkörpers und insbesondere zwischen unterer Randkante 11 und Öffnung 2 angeordnet sein. Mithilfe der Libelle 18 kann eine durch die beiden Fenster 17 gelegt gedachte Gerade in eine Horizontalebene gebracht werden. Stecken - wie in den Figuren 7 und 7a dargestellt - in den beiden Fenstern 17 die Köpfe der Schraube 27, so kann die Hohlwanddose 25 horizontal ausgerichtet werden.

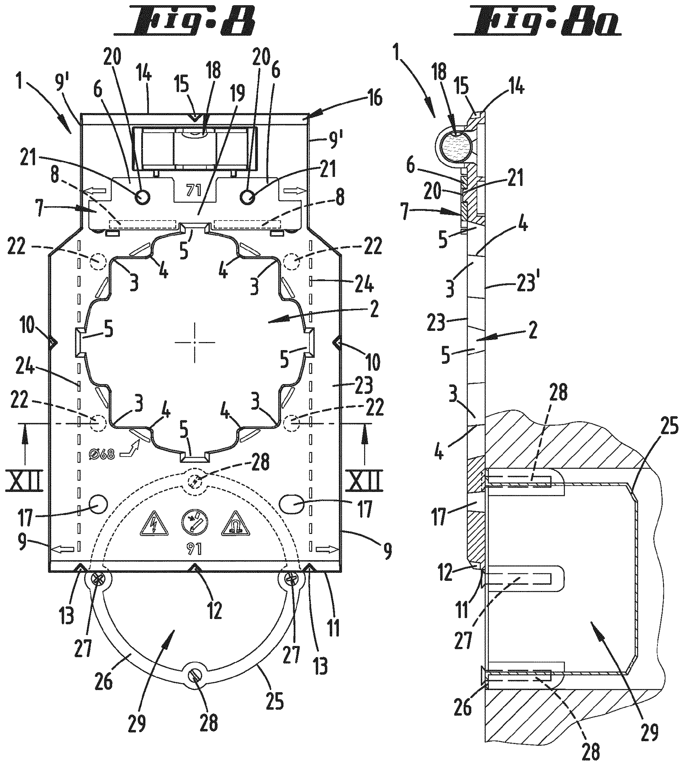

Eine Ausrichtung der Hohlwanddose 25 kann aber auch dadurch erfolgen, dass die untere Randkante 11 - wie in den Figuren 8 und 8a dargestellt, auf die Schrauben 27 aufgesetzt wird.

Der Grundkörper der Schablone 1 besitzt zumindest eine Durchstecköffnung 8. Beim Ausführungsbeispiel sind zwei Durchstecköffnungen 8 vorgesehen, die auf einer gedachten Linie angeordnet sind, die parallel zur Erstreckungsrichtung der Libelle 18 ausgerichtet ist. Die Libelle 18 kann sich im Ausführungsbeispiel parallel zu der oberen Randkante 14 oder der unteren Randkante 11 erstrecken. Sie kann aber auch in einem Winkel dazu ausgerichtet sein. Wesentlich ist eine feste Winkelbeziehung der Erstreckungsrichtung der Libelle 18 zu zumindest einer der Randkanten und/oder zu zumindest einer Linie, die durch die Durchstecköffnung 18 definiert ist und/oder zu einer Linie, auf der die Fenster 17 angeordnet sind.

Beim Ausführungsbeispiel erstreckt sich die Linie, auf der die ein oder mehreren Durchstecköffnungen 8 angeordnet sind, zwischen der Libelle 18 und der Öffnung 2. Es kann aber auch vorgesehen sein, dass sich die Linie, auf der sich die ein oder mehreren Durchstecköffnungen 8 erstrecken, im Bereich zwischen der Öffnung 2 und der unteren Randkante 11 erstreckt. Es kann zudem vorgesehen sein, dass die Öffnungen 8 und/oder die Fenster 17 auf einer geraden Linie liegen, die senkrecht zur Erstreckungsrichtung der Libelle 18 verlaufen. Bei einer derartigen Anordnung lässt sich eine vertikale Positionierung vornehmen.

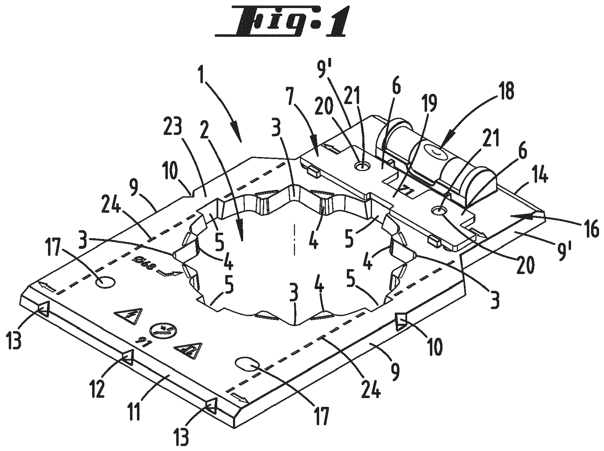

Es ist ein Anschlagträger 7 vorgesehen, der von einer Metallplatte ausgebildet ist. Die Metallplatte kann eine Stahlplatte sein. Die Figur 1 zeigt den Anschlagträger 7 in einer Verwahrstellung. Der als Flachkörper ausgebildete Anschlagträger 7 liegt hierbei mit einer Breitseitenfläche auf einer Breitseitenfläche des Grundkörpers der Schablone 1 auf. Beim Ausführungsbeispiel ist dies eine frontseitige Breitseitenfläche 23. Es können Vorsprünge vorgesehen sein, die an einer Randkante des Anschlagträgers 7 anliegen. Ferner können Vorsprünge 21 vorgesehen sein, die in Öffnungen 20 des Anschlagträgers 7 eingreifen, um so den Anschlagträger 7 in seiner Verwahrstellung zu fixieren.

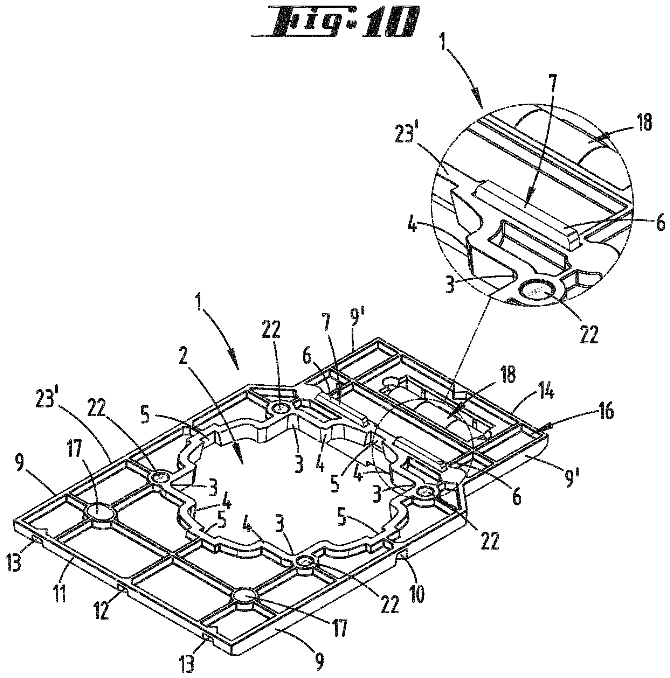

Der Anschlagträger 7 besitzt zwei Abschnitte, die in die Durchstecköffnungen 8 eingesteckt werden können. Ein die beiden Abschnitte verbindender Verbindungssteg 19 bildet eine Einsteckbegrenzung aus, die an die Breitseitenfläche 23 anschlägt, wenn die beiden Abschnitte des Anschlagträgers 7 vollständig in die Durchstecköffnungen 8 eingesteckt sind. In diesem Zustand (vgl. Figuren 10 und 11) ragen Endabschnitte, die jeweils einen Anschlag 6 ausbilden, über die Rückseite 23' heraus. Die beiden Abschnitte, die jeweils den Anschlag 6 ausbilden, bilden eine sich geradlinig erstreckende schmale Stirnkante aus. Die beiden Stirnkanten verlaufen in einer gemeinsamen Ebene. An die Stirnkanten schließen sich rechtwinklig zur Stirnkante verlaufende Seitenflanken an, die sich bis zum Verbindungssteg 19 erstrecken. Die Länge der Seitenflanke ist größer als die Materialstärke des Grundkörpers der Schablone.

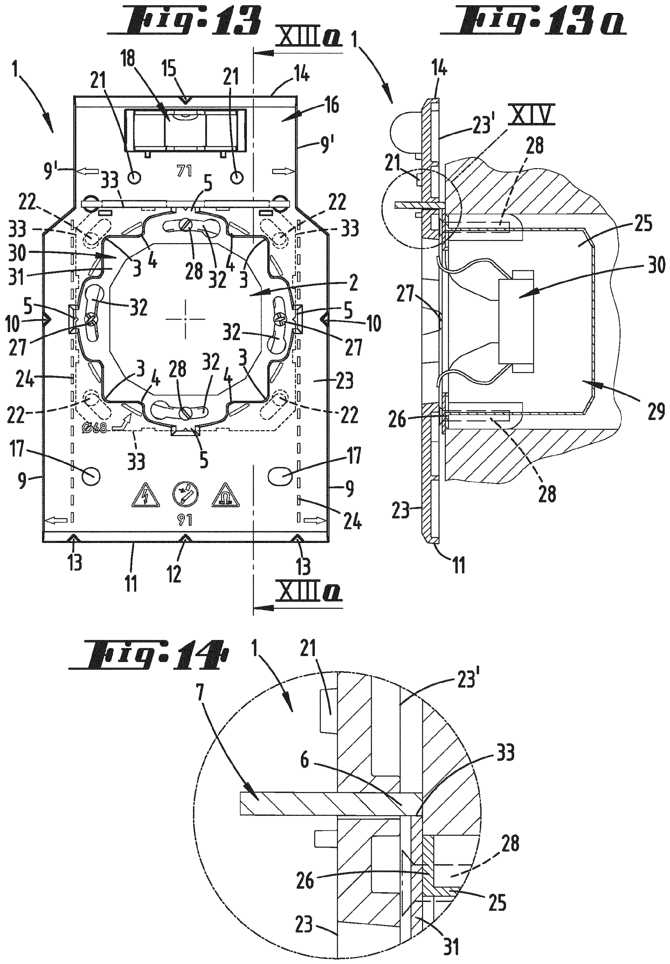

Die Zeichnungen und insbesondere die Figur 13a zeigen einen Zustand, bei dem der Anschlagträger 7 mit seinen beiden Fortsätzen von einer Frontseite her in die Durchstecköffnungen eingesteckt ist. Bei dieser Zuordnung des Anschlagträgers 7 ragen die Anschläge 6 nur geringfügig über die Rückseite 23'. Es ist aber auch möglich, die Fortsätze von der Rückseite her in die ein oder mehreren Durchstecköffnungen 8 einzustecken. Dann ragt der Anschlagträger 7 weiter von der Rückseite 23' ab. Es ist somit von Vorteil, wenn die Fortsätze eines Anschlagträgers 7 sowohl von der Frontseite als auch von der Rückseite her in Durchstecköffnungen 8 eingesteckt werden können.

Die Figuren 13 bis 14 zeigen die Verwendung dieser Anschläge 6. Ein in eine Dosenhöhlung 29 der Hohlwanddose 25 eingesteckter Einsatz 30, bei dem es sich um einen Schaltereinsatz, einen Steckeinsatz oder dergleichen handeln kann, besitzt einen Metallrahmen, der insbesondere aus einem magnetisierbaren Werkstoff, beispielsweise Stahl gefertigt ist. Der Rahmen bildet eine Metallplatte 31 aus, die auf der Randkante der Hohlwanddose 25 aufliegt. Die Metallplatte 31 besitzt rechtwinklig zueinander verlaufende Randkanten 33. An eine der Randkanten 33, insbesondere der nach oben weisenden Randkante 33, können die Anschläge 6 angelegt werden. Bei gelösten Schrauben 27, die jeweils in eine Befestigungsöffnung 32 der Metallplatte 31 eingreifen, kann der Einsatz 30 gedreht werden. Mithilfe der Magnete 22 haftet die Schablone 1 an der Metallplatte 31. Mithilfe der Libelle 18 können die Metallplatte 31 bzw. der Einsatz 30 in eine horizontale Lage gebracht werden.

Mithilfe der Vorsprünge 4 bzw. der Ausschnitte 3 kann die Schablone 1 zu einer Hohlwanddose 25 oder zu einem darin steckenden Einsatz 30 zentriert werden. Mithilfe der Markierungen 10, 12, 13 und 15 bzw. den Randkanten 9, 11, 14 kann die Position benachbarter Installationsdosen ermittelt werden. Es ist insbesondere möglich, mit der Markierung 12 oder der Markierung 15 bei horizontal orientierter Schablone 1 Mittelpunkte anzuzeichnen für oberhalb oder unterhalb einer Hohlwanddose 25 anzuordnende weitere Hohlwanddosen. Es ist ferner möglich, bei vertikal orientierter Schablone 1 horizontal neben einer Hohlwanddose 25 Mittelpunkte anzuzeichnen, an denen Bohrungen für weitere Hohlwanddosen 25 angesetzt werden können.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Eine Vorrichtung, die gekennzeichnet ist durch einen an eine Randkante 33 des Installationselementes 25, 30 anlegbaren, von einer Rückseite der Schablone 1 vorstehenden, eine Linie definierenden Anschlag 7.

Eine Vorrichtung, die dadurch gekennzeichnet ist, dass der Anschlag 7 von einem Anschlagträger 6 ausgebildet ist, der entnehmbar in einer Durchstecköffnung 8 der Schablone 1 steckt.

Eine Vorrichtung, die dadurch gekennzeichnet ist, dass der Anschlagträger 6 aus einem mit dem magnetischen Element 22 wechselwirkenden Werkstoff besteht und in einer Verwahrstellung auf der Frontseite 23 der Schablone 1 an dem magnetischen Element 22 anhaftet.

Eine Vorrichtung, die dadurch gekennzeichnet ist, dass der Anschlag 7 von einer von der Rückseite 23' der Schablone 1 abragenden länglichen Rippe ausgebildet ist und/oder dass von der Rückseite 23' der Schablone 1 zwei, ein oder mehrere parallel zu einer Randkante 11, 14 abragende Anschlagelemente oder Rippen vorgesehen sind, die den Anschlag 7 ausbilden und/oder dass der Anschlagträger 6 zwei mit einem Verbindungssteg 19 miteinander verbundene Abschnitte aufweist, von denen jeder einen Fortsatz aufweist, der durch die Durchstecköffnung 8 oder jeweils durch eine Durchstecköffnung 8 hindurchsteckbar ist.

Eine Vorrichtung, die gekennzeichnet ist durch zwei auf einer Linie angeordnete Eingriffsöffnungen 17, in die jeweils der Kopf einer Befestigungsschraube 28 oder eine Spannschraube 27 einer Hohlwanddose 25 eingreifen kann.

Eine Vorrichtung, die dadurch gekennzeichnet ist, dass eine insbesondere großflächige Öffnung 2 vorgesehen ist und/oder dass die Schablone als flacher Körper gestaltet ist, und/oder dass zwei seitliche Randkanten 9 parallel zueinander verlaufen und Markierungen 10 aufweisen, die auf einer gedachten Linie liegen, die ein Zentrum der Öffnung 2 kreuzt und senkrecht zu den seitlichen Randkanten 9 verläuft und/oder dass eine untere Randkante 11 parallel zu einer oberen Randkante 14 verläuft, wobei die untere bzw. oberer Randkante 11, 14 erste Markierungen 12, 15 aufweisen, die auf einer gedachten Linie liegen, die das Zentrum der Öffnung 10 kreuzt und senkrecht zu der unteren bzw. oberen Randkante 11, 14 verläuft und/oder dass die Fenster 17 einen Abstand aufweisen, der dem Abstand der Spannschrauben 27 einer Hohlwanddose 25 entspricht, und die einen Durchmesser aufweisen, dass die Köpfe der Spannschrauben 27 dort hineingreifen können, wobei die Fenster 17 auf einer Linie angeordnet sind, die parallel zu einer Randkante 11, 14 verläuft.

Eine Vorrichtung, die dadurch gekennzeichnet ist, dass der Rand der Öffnung 2 vier jeweils von einem Vorsprung 4 begrenzte erste Ausschnitte 3 aufweist, deren Ränder auf den Ecken eines Quadrates angeordnet sind und/oder dass zwei sich gegenüberliegende zweite Ausschnitte 5 auf einer gedachten Linie liegen, die durch das Zentrum der Öffnung 2 verläuft und parallel zur unteren bzw. oberen Randkante 11, 14 oder parallel zur seitlichen Randkante 9 verläuft.

Eine Vorrichtung, die dadurch gekennzeichnet ist, dass die Schablone 1 aus Kunststoff besteht und der Anschlagträger 6 aus Stahl.

Eine Vorrichtung, die dadurch gekennzeichnet ist, dass die seitlichen Randkanten 9 eines die Öffnung 2 aufweisenden ersten Abschnitts der Schablone 1 einen Abstand von 91 mm aufweisen und/oder dass seitliche Randkanten 9' eines verschmälerten Fortsatzes 16 der Schablone 1 einen Abstand von 71 mm aufweisen, und/oder dass die von dem Fortsatz 16 gebildete oberer Randkante 14 und die untere Randkante 11 einen Abstand vom Zentrum der Öffnung 2 haben, der größer ist als der Abstand der seitlichen Randkanten 9 vom Zentrum der Öffnung 2 und/oder dass der Abstand der oberen Randkante 14 oder der unteren Randkante 11 vom Zentrum der Öffnung 2 71 mm beträgt.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

**Liste der Bezugszeichen**

| | | | |
|---|---|---|---|
| 1 | Schablone | 25 | Hohlwanddose |
| 2 | Öffnung | 26 | Rand |
| 3 | Ausschnitt | 27 | Spannschraube |
| 4 | Vorsprung | 28 | Befestigungsschraube |
| 5 | Ausschnitt | 29 | Dosenhöhlung |
| 6 | Anschlag | 30 | Einsatz |
| 7 | Anschlagträger | 31 | Metallplatte |
| 8 | Durchstecköffnung | 32 | Befestigungsöffnung |
| 9 | seitliche Randkante | 33 | Randkante |
| 9' | seitliche Randkante | | |
| 10 | Markierung | | |
| 11 | untere Randkante | | |
| 12 | Markierung | | |
| 13 | Markierung | | |
| 14 | obere Randkante | | |
| 15 | Markierung | | |
| 16 | verschmälerter Fortsatz | | |
| 17 | Fenster | | |
| 18 | Libelle | | |
| 19 | Verbindungssteg | | |
| 20 | Öffnung | | |
| 21 | Vorsprung | | |
| 22 | Magnet | | |
| 23 | Frontseite | | |
| 23' | Rückseite | | |
| 24 | Orientierungslinie | | |

## Patentansprüche

1. Vorrichtung zum Erleichtern der Installation von Steckdosen, Schaltereinsätzen oder anderen elektrischen Installationselementen (25, 30) mit einer Schablone (1), die insbesondere von einem flachen Körper gebildet ist und einen an eine Randkante (33) des Installationselementes (25, 30) anlegbaren, von einer Rückseite der Schablone (1) abstehenden, eine Linie definierenden Anschlag (6) aufweist, **dadurch gekennzeichnet, dass** der Anschlag (6) von einem Anschlagträger (7) ausgebildet ist, der entnehmbar in einer Durchstecköffnung (8) der Schablone (1) steckt.

2. Vorrichtung nach Anspruch 1, **gekennzeichnet durch** ein magnetisches Element (22) zum Anhaften der Schablone (1) an dem Installationselement (30).

3. Vorrichtung nach Anspruch 1, **gekennzeichnet durch** eine Libelle (18) zum horizontalen Ausrichten der Schablone (1).

4. Vorrichtung nach einem der vorgehenden Ansprüche, **dadurch gekennzeichnet, dass** der Anschlagträger (6) aus einem mit dem magnetischen Element (22) wechselwirkenden Werkstoff besteht und in einer Verwahrstellung auf der Frontseite (23) der Schablone (1) an dem magnetischen Element (22) anhaftet.

5. Vorrichtung nach einem der vorhergehenden Ansprüche, **dadurch gekennzeichnet, dass** der Anschlagträger (7) zwei mit einem Verbindungssteg (19) miteinander verbundene Abschnitte aufweist, von denen jeder einen Fortsatz aufweist, der durch die Durchstecköffnung (8) oder jeweils durch eine Durchstecköffnung (8) hindurchsteckbar ist.

6. Vorrichtung zum Erleichtern der Installation von Steckdosen, Schaltereinsätzen oder anderen elektrischen Installationselementen (25, 30) mit einer Schablone (1), mit einer Libelle (18) zum horizontalen Ausrichten der Schablone (1), und mit zwei auf einer Linie angeordneten Eingriffsöffnungen (17), in die jeweils der Kopf einer Befestigungsschraube (28) oder eine Spannschraube (27) einer Hohlwanddose (25) eingreifen kann, **dadurch gekennzeichnet, dass** die Eingriffsöffnungen (17) von ringsumschlossenen Fenstern ausgebildet sind, wobei der Abstand der Zentren der Fenster (17) dem Abstand der Spannschrauben (27) einer Hohlwanddose (25) entspricht und ein erstes der Fenster (17) einen Durchmesser aufweist, der dem Durchmesser der Spannschraube (27) entspricht und ein zweites der Fenster (17) eine in Richtung quer zur Linie sich erstreckende Weite aufweist, die dem Durchmesser des ersten Fensters (17) entspricht, und eine parallel zur Linie gemessene Länge aufweist, die größer ist als der Durchmesser des ersten Fensters (17).

7. Vorrichtung nach einem der vorhergehenden Ansprüche, **dadurch gekennzeichnet, dass** eine insbesondere großflächige Öffnung (2) in der Schablone (1) vorgesehen ist.

8. Vorrichtung nach einem der vorhergehenden Ansprüche, **dadurch gekennzeichnet, dass** die Schablone als flacher Körper gestaltet ist.

9. Vorrichtung nach einem der vorhergehenden Ansprüche, **dadurch gekennzeichnet, dass** zwei seitliche Randkanten (9) parallel zueinander verlaufen und Markierungen (10) aufweisen, die auf einer gedachten Linie liegen, die ein Zentrum der Öffnung (2) kreuzt und senkrecht zu den seitlichen Randkanten (9) verläuft.

10. Vorrichtung nach einem der vorhergehenden Ansprüche, **dadurch gekennzeichnet, dass** eine untere Randkante (11) parallel zu einer oberen Randkante (14) verläuft, wobei die untere bzw. obere Randkante (11, 14) erste Markierungen (12, 15) aufweisen, die auf einer gedachten Linie liegen, die das Zentrum der Öffnung (2) kreuzt und senkrecht zu den unteren bzw. oberen Randkanten (11, 14) verläuft.

11. Vorrichtung nach einem der vorhergehenden Ansprüche, **dadurch gekennzeichnet, dass** der Rand der Öffnung (2) vier jeweils von einem Vorsprung (4) begrenzte erste Ausschnitte (3) aufweist, deren Ränder auf den Ecken eines Quadrates angeordnet sind.

12. Vorrichtung nach einem der vorhergehenden Ansprüche, dass zwei sich gegenüberliegende zweite Ausschnitte (5) auf einer gedachten Linie liegen, die durch das Zentrum der Öffnung (2) verläuft und parallel zur unteren bzw. oberen Randkante (11, 14) oder parallel zur seitlichen Randkante (9) verläuft.

13. Vorrichtung nach einem der vorhergehenden Ansprüche, **dadurch gekennzeichnet, dass** die Schablone (1) aus Kunststoff besteht und der Anschlagträger (6) aus Stahl.

14. Vorrichtung nach einem der vorhergehenden Ansprüche, **dadurch gekennzeichnet, dass** die seitlichen Randkanten (9) eines die Öffnung (2) aufweisenden ersten Abschnitts der Schablone (1) einen Abstand von 91 mm aufweisen und/oder dass seitliche Randkanten (9') eines verschmälerten Fortsatzes (16) der Schablone (1) einen Abstand von 71 mm aufweisen, und/oder dass die von dem Fortsatz (16) gebildete oberer Randkante (14) und die untere Randkante (11) einen Abstand vom Zentrum der Öffnung (2) haben, der größer ist als der Abstand der seitlichen Randkanten (9) vom Zentrum der Öffnung (2) und/oder dass der Abstand der oberen Randkante (14) oder der unteren Randkante (11) vom Zentrum der Öffnung (2) 71 mm beträgt.

15. Vorrichtung, **gekennzeichnet durch** eines oder mehrere der kennzeichnenden Merkmale eines der vorhergehenden Ansprüche.
